# EUROPEAN PATENT APPLICATION

(11) **EP 4 770 199 A1**
(43) Date of publication of application: **01.07.2026**
(21) Application number: 24870835.6
(22) Date of filing: 26.09.2024
(51) Int. Cl.: H04W 40/22

(54) **COMMUNICATION METHOD AND APPARATUS**

(30) Priority: 26.09.2023 CN 202311260406
(71) Applicant: HUAWEI TECHNOLOGIES CO., LTD., Shenzhen 518129 (CN)
(72) Inventor: LI, Chenwan, Shenzhen, Guangdong 518129 (CN); WU, Yiling, Shenzhen, Guangdong 518129 (CN); CHEN, Lei, Shenzhen, Guangdong 518129 (CN); SHI, Yulong, Shenzhen, Guangdong 518129 (CN)
(74) Representative: Isarpatent
(86) International application number: PCT/CN2024/121283
(87) International publication number: WO 2025/067291

(57) **Abstract**

A communication method and apparatus are provided, to provide a relay service for an AIOT terminal by using a relay apparatus, to improve signal coverage of the terminal in an AIOT scenario. According to the method, the relay apparatus sends first information to a core network apparatus, where the first information is used to request to provide the relay service for the AIOT terminal, and/or indicates that the relay apparatus supports providing the relay service for the AIOT terminal. An access network apparatus may receive third information from the core network apparatus, to indicate that the relay apparatus provides the relay service for the AIOT terminal. The relay apparatus may further receive configuration information of the relay service from the access network apparatus. According to the method, the relay apparatus may obtain, from the access network apparatus, the configuration information required for providing the relay service for the AIOT terminal, to support the relay apparatus in providing the relay service for the AIOT terminal.

## Description

### CROSS-REFERENCE TO RELATED APPLICATIONS

This application claims priority to Chinese Patent Application No. 202311260406.9, filed with the China National Intellectual Property Administration on September 26, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With increasingly wide application of 5th generation (5th generation, 5G) mobile communication, new radio (new radio, NR) communication, machine-type communication (machine-type communication, MTC), and internet of things (internet of things, IoT) communication, a quantity of IoT device connections increases day by day. Consequently, the industry has an increasingly strong demand for reducing costs and power consumption of the IoT device. In the 4th generation (4th generation, 4G) mobile communication era, 3GPP introduces a narrow-band IoT (narrow-band IoT, NB-IoT) system, to reduce the costs and the power consumption of the IoT device. However, an NB-IoT terminal further needs an overall external power supply, for example, a battery or an external power supply. In addition, the NB-IoT terminal has a capability of generating a local high-frequency local oscillation carrier. Therefore, a terminal of this type can achieve only milliwatt-level power consumption, and the power consumption needs to be further reduced. A radio frequency identification (radio frequency identification, RFID) technology provides a good technical reference in terms of low power consumption, and can support microwatt-level power consumption. Therefore, the RFID technology has a better application prospect.

In view of the low power consumption advantage of the RFID communication technology, a 5G ambient IoT (ambient IoT, AIOT) emerges. Terminals in the AIOT are referred to as AIOT terminals. To meet a requirement for ultra-low power consumption, the AIOT terminals use a low-precision low-power medium-to-low frequency ring oscillator or supports a completely local-oscillator-free manner, to receive a downlink signal. Currently, how to expand coverage by using a relay in an AIOT scenario is a technical problem that needs to be resolved.

### SUMMARY

This application provides a communication method and apparatus, to provide a relay service for an AIOT terminal by using a relay apparatus, to improve signal coverage of the terminal in an AIOT scenario.

According to a first aspect, a communication method is provided. The method may be implemented by a first communication apparatus. The first communication apparatus may be a relay device, or may be a component in the relay device, for example, referred to as a relay apparatus. The component in this application may include, for example, at least one of a chip, a chip system, a processor, a transceiver, a processing unit, or a transceiver unit. The relay device may be a terminal device or a network device configured to provide a relay service. This is not specifically limited. For example, the relay apparatus is an execution body. The method may be implemented by using the following steps: The relay apparatus sends first information to a core network apparatus, where the first information is used to request, indicates, or represents to provide a relay service for an AIOT terminal, and/or the first information indicates that the relay apparatus supports providing the relay service for the AIOT terminal; and the relay apparatus receives configuration information of the relay service from an access network apparatus.

Based on the first aspect, the relay apparatus may send the first information to the core network apparatus, where the first information is used to request or represents that providing the relay service for the AIOT terminal is supported, so that the access network device can provide, for the relay apparatus based on an indication of the core network element, the configuration information required for providing the relay service for the AIOT terminal, to provide a relay transmission solution applicable to the AIOT terminal. Therefore, the relay apparatus may provide the relay service for the AIOT terminal based on the configuration information, to improve relay communication performance of the terminal in an AIOT scenario.

In addition, in an alternative implementation, the first information may not explicitly represent to request to provide the relay service for the AIOT terminal or represent that providing the relay service for the AIOT terminal is supported. For example, the first information represents that providing the relay service is supported. In this case, the core network device may consider by default that the relay apparatus supports providing the relay service for the AIOT terminal, so that the configuration information required for the relay service for the AIOT terminal is provided for the relay apparatus by using the method shown in this application.

In a possible implementation, the configuration information includes one or more of the following: a relay identity of the relay service; first area information, indicating an area to which a cell in which the relay apparatus is located belongs; second area information, indicating an area to which a cell in which the AIOT terminal is located belongs; and an identity set of the AIOT device. The relay identity may be used to associate the relay apparatus with the AIOT terminal. The first area information may be used by the relay apparatus to determine whether an area change occurs, and the second area information may be used by the AIOT terminal to determine whether to send an area change. The identity set of the AIOT device may be used by the relay apparatus to allocate an identity to the AIOT terminal. For example, the relay apparatus may send the identity of the AIOT terminal to the AIOT terminal, where the identity is included in the identity set.

In a possible implementation, the relay apparatus may further send the second area information to the AIOT terminal. The second area information may be used by the relay apparatus to identify whether an area change occurs.

In a possible implementation, the configuration information includes a system message and transmission configuration information of the system message, and the relay apparatus may further send the system message to the AIOT terminal based on the transmission configuration information of the system message.

In a possible implementation, the relay apparatus may further receive data from the AIOT terminal, and send a first message to the access network apparatus, where the first message is carried on a signaling radio bearer, and the first message includes the data. Therefore, when there is uplink data, the relay apparatus may forward the uplink data of the AIOT terminal to a base station via control signaling. Compared with carrying the data of the AIOT terminal via data signaling, carrying the data of the AIOT terminal via the control signaling can reduce communication protocol complexity, to adapt to a capability of the AIOT terminal.

In a possible implementation, the first message further includes the identity of the AIOT terminal.

In a possible implementation, the data is included in a container of the first message.

In a possible implementation, the data includes a non-access stratum NAS data packet.

In a possible implementation, the first message is an RRC message.

In a possible implementation, the relay apparatus receives an RRC message from the AIOT terminal, where the data is carried in the RRC message.

In a possible implementation, the configuration information is carried in a broadcast message or a unicast message; and if the configuration information is carried in the broadcast message, the broadcast message may further include third area information, indicating information about an area to which a cell in which a first terminal is located belongs. When the configuration information is sent via the broadcast message, for example, when the configuration information in the broadcast message includes the first area information and/or the second area information, the broadcast message may further include the third area information, where the third area information may be used by another terminal (for example, another AIOT terminal or a common terminal) to identify whether to send an area change. Therefore, the broadcast message may carry area information of a plurality of types of devices and/or area information of a plurality of devices.

In a possible implementation, if it is determined that the area in which the relay apparatus is located changes, the relay apparatus sends second information to the access network apparatus and/or the core network apparatus, where the second information indicates that an area change occurs. The second information may be a tracking area update request or a field in the request, so that area information of the relay apparatus is updated by using a tracking area update procedure, and area information update efficiency and update reliability can be improved.

In a possible implementation, the relay apparatus may further receive a second message from the access network apparatus, where the second message is used to page a second terminal; and the relay apparatus sends a third message to the AIOT terminal, where the third message is used to page the AIOT terminal. Based on this implementation, when paging the AIOT terminal, the base station may send paging to the relay apparatus, and the relay apparatus may send paging to the AIOT terminal level by level.

In a possible implementation, the third message includes a first indication, and the first indication indicates that the relay apparatus provides the relay service for the AIOT terminal. Based on this implementation, when paging the AIOT terminal, the relay apparatus may indicate, to the AIOT terminal, that the relay apparatus is a relay device instead of a base station. Therefore, the AIOT terminal may perform subsequent transmission by using the relay solution shown in this application. A transmission manner of the AIOT terminal may vary depending on whether there is a relay.

In a possible implementation, the second message is a unicast message, and/or the third message is a unicast message. Level-by-level paging may be performed by using a unicast message, to reduce overheads of a paging process.

In a possible implementation, the relay apparatus is connected to the AIOT terminal by using a first access technology, the relay apparatus is connected to the access network apparatus by using a second access technology, and the first access technology and the second access technology are different access technologies. For example, an AIOT access technology, for example, an AIOT transmission manner, is used between the AIOT terminal and the relay apparatus; and an NR access technology, for example, an access technology for 5G or future 6G mobile communication in an enhanced mobile broadband (enhanced mobile broadband, eMBB) scenario, is used between the relay apparatus and the base station. The AIOT access technology and the NR access technology may be different radio access technologies (radio access technologies, RATs), and the AIOT access technology and the NR access technology may have at least different modulation and coding schemes, bottom-layer transmission manners, or sub-carrier spacings (sub-carrier spacings, SCSs).

According to a second aspect, a communication method is provided. The method may be implemented by a second communication apparatus. The second communication apparatus in this application may be an access network apparatus. The access network apparatus may be an access network device or a component in the access network device. The access network device is, for example, a base station. For example, the access network apparatus is an execution body. The method may be implemented by using the following steps: The access network apparatus receives third information from a core network apparatus, where the third information indicates that a relay apparatus provides a relay service for an AIOT terminal; and the access network apparatus sends configuration information of the relay service to the relay apparatus.

For beneficial effects of the second aspect and the possible implementations of the second aspect, refer to beneficial effects of the first aspect and the corresponding possible implementations of the first aspect. Details are not described again.

In a possible implementation, the access network apparatus may further receive a first message from the relay apparatus, where the first message is carried on a signaling radio bearer, and the first message includes data; and the access network apparatus sends the data of the AIOT terminal to the core network apparatus.

In a possible implementation, the first message includes an identity of the AIOT terminal.

In a possible implementation, the data is included in a container of the first message.

In a possible implementation, the data includes a NAS data packet.

In a possible implementation, the first message is an RRC message.

In a possible implementation, the configuration information includes one or more of the following: a relay identity of the relay service; first area information, indicating an area to which a cell in which the relay apparatus is located belongs; second area information, indicating an area to which a cell in which the AIOT terminal is located belongs; and an identity set of the AIOT device, where the identity set may include an identity of the AIOT terminal.

In a possible implementation, the configuration information is carried in a broadcast message or a unicast message; and if the configuration information is carried in the broadcast message, the broadcast message may further include third area information, indicating information about an area to which a cell in which a third terminal is located belongs.

In a possible implementation, the access network apparatus receives second information from the relay apparatus, where the second information indicates that an area change occurs.

In a possible implementation, the access network apparatus may further receive a fourth message from the core network apparatus, where the fourth message is used to page the AIOT terminal; and the access network apparatus may further send a second message to the relay apparatus, where the second message is used to page the AIOT terminal.

In a possible implementation, the second message is a unicast message.

In a possible implementation, the fourth message includes at least one of the following information: the relay identity of the relay service; the first area information, indicating the area to which the cell in which the relay apparatus is located belongs; and the second area information, indicating the area to which the cell in which the AIOT terminal is located belongs. Therefore, the base station may determine, based on the relay identity, the first area information, or the second area information that is carried in the fourth message, the relay apparatus that provides the relay service for the to-be-paged AIOT terminal.

In a possible implementation, the access network apparatus sends the configuration information of the relay service to the core network apparatus, where the configuration information of the relay service may include at least one of the relay identity, the first area information, and the second area information; or the access network apparatus receives the configuration information of the relay service from the core network apparatus, where the configuration information of the relay service includes at least one of the relay identity, the first area information, and the second area information.

In a possible implementation, the relay apparatus is connected to the AIOT terminal by using a first access technology, the relay apparatus is connected to the access network apparatus by using a second access technology, and the first access technology and the second access technology are different access technologies.

According to a third aspect, a communication method is provided. The method may be implemented by a core network apparatus. The core network apparatus is, for example, a core network element or a component in the core network element. The core network element is, for example, an AMF. For example, the core network apparatus is an execution body. The method may be implemented by using the following steps: The core network apparatus receives first information from a relay apparatus, where the first information indicates that the relay apparatus provides a relay service for an AIOT terminal, and/or the first information indicates that the relay apparatus supports providing the relay service for the AIOT terminal; and the core network apparatus sends third information to an access network apparatus, where the third information indicates that the relay apparatus provides the relay service for the AIOT terminal.

For beneficial effects of the third aspect and the possible implementations of the third aspect, refer to beneficial effects of the first aspect and the corresponding possible implementations of the first aspect. Details are not described again.

In a possible implementation, the core network apparatus may further send a fourth message to the access network apparatus, where the fourth message is used to page the AIOT terminal, and the fourth message may include at least one of the following information: a relay identity of the relay service; first area information, indicating an area to which a cell in which the relay apparatus is located belongs; and second area information, indicating an area to which a cell in which the AIOT terminal is located belongs.

A base station can determine, based on the relay identity, the first area information, or the second area information, the relay apparatus serving the paged AIOT terminal, so that the base station can send a unicast message to the relay apparatus, to indicate the relay apparatus to page the AIOT terminal. Therefore, the base station does not need to page the relay apparatus via a broadcast paging message, and then the relay apparatus pages the AIOT terminal, so that paging overheads can be reduced.

In a possible implementation, the core network apparatus may further receive configuration information of the relay service from the access network apparatus, where the configuration information of the relay service includes at least one of the relay identity, the first area information, and the second area information; or the core network apparatus may further send configuration information of the relay service to the access network apparatus, where the configuration information of the relay service includes at least one of the relay identity, the first area information, and the second area information.

In a possible implementation, the relay apparatus is connected to the AIOT terminal by using a first access technology, the relay apparatus is connected to the access network apparatus by using a second access technology, and the first access technology and the second access technology are different access technologies.

According to a fourth aspect, a communication apparatus is provided. The apparatus may implement the method according to any one of the first aspect to the third aspect and the possible implementations of the first aspect to the third aspect. The apparatus has functions of the relay apparatus, the access network apparatus, and the core network apparatus. The apparatus is, for example, a terminal device, a functional module in the terminal device, a network device, or a functional module in the network device.

In an optional implementation, the apparatus may include modules that one-to-one correspond with the methods/operations/steps/actions according to any one of the first aspect to the third aspect and the possible implementations of the first aspect to the third aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in any one of the first aspect to the third aspect, the apparatus may include the communication unit and the processing unit.

According to a fifth aspect, an embodiment of this application further provides a communication apparatus, including a processor, configured to execute a computer program (or computer-executable instructions) stored in a memory. When the computer program (or the computer-executable instructions) is executed, the apparatus is caused to perform the method according to any one of the first aspect to the third aspect and the possible implementations of the first aspect to the third aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a sixth aspect, a computer-readable storage medium is provided. The computer-readable storage medium is configured to store a computer program or instructions, and when the computer program or the instructions are run, the method according to any one of the first aspect to the third aspect and the possible implementations of the first aspect to the third aspect is implemented.

According to a seventh aspect, a computer program product including instructions is provided. When the computer program product runs on a computer, the method according to any one of the first aspect to the third aspect and the possible implementations of the first aspect to the third aspect is implemented.

According to an eighth aspect, an embodiment of this application further provides a communication apparatus, configured to perform the method according to any one of the first aspect to the third aspect and the possible implementations of the first aspect to the third aspect.

According to a ninth aspect, a chip system is provided. The chip system includes a logic circuit (which may alternatively be understood as that the chip system includes a processor, and the processor may include a logic circuit, and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending function and the receiving function in the method according to any one of the first aspect to the fourth aspect and the possible implementations of the first aspect to the fourth aspect. The logic circuit may be further configured to transmit a message to the input/output interface, or receive a message from another communication apparatus through the input/output interface. The chip system may be configured to implement the method according to any one of the first aspect to the fourth aspect and the possible implementations of the first aspect to the fourth aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a tenth aspect, a communication method is provided. A communication system may include the method implemented by the relay apparatus according to the first aspect and any possible implementation of the first aspect, the method implemented by the access network apparatus according to the second aspect and any possible implementation of the second aspect, and the method implemented by the core network apparatus according to the third aspect and any possible implementation of the third aspect.

According to an eleventh aspect, a communication system is provided. The communication system may include a relay apparatus, an access network apparatus, and a core network apparatus. The relay apparatus may be configured to implement the method according to the first aspect and any possible implementation of the first aspect, the access network apparatus may be configured to implement the method according to the second aspect and any possible implementation of the second aspect, and the core network apparatus may be configured to implement the method according to the third aspect and the possible implementations of the third aspect.

For technical effects brought by the fourth aspect to the eleventh aspect, refer to descriptions of corresponding solutions in the first aspect to the third aspect. Details are not described herein again.

### BRIEF DESCRIPTION OF DRAWINGS

FIG. 1 is a diagram of an architecture of a wireless communication system according to an embodiment of this application;
FIG. 2 is a diagram of a communication procedure between an AIOT terminal and a reader/writer according to an embodiment of this application;
FIG. 3 is an SL relay protocol stack architecture according to an embodiment of this application;
FIG. 4 is a schematic flowchart of a communication method according to an embodiment of this application;
FIG. 5 is a relay protocol stack architecture in an AIOT scenario according to an embodiment of this application;
FIG. 6 is a schematic flowchart of another communication method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of another communication apparatus according to an embodiment of this application.

### DESCRIPTION OF EMBODIMENTS

Embodiments of this application provide a communication method and apparatus. The method and the apparatus are based on a same inventive concept. Because the method and the apparatus have a similar problem-resolving principle, for implementations of the apparatus and the method, refer to each other, and no repeated description is provided.

In descriptions of this application, terms such as "first" and "second" are merely used for distinction and description, and cannot be understood as an indication or implication of relative importance or an indication or implication of a sequence. It should be noted that an appearance sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or c may represent a, b, c, a and b, a and c, b and c, or a, b, and c, where a, b, and c may be singular or plural. In the descriptions of this application, "/" represents "or". For example, a/b represents a or b.

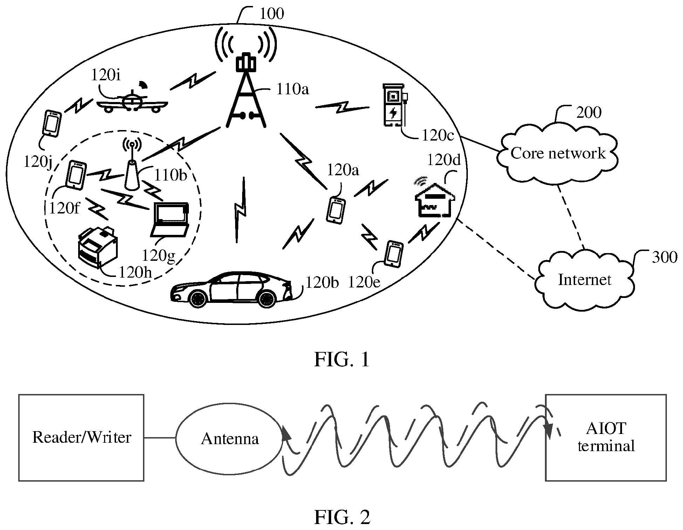

FIG. 1 is a diagram of an architecture of a communication system to which an embodiment of this application is applied. As shown in FIG. 1, the communication system includes an access network 100 and a core network 200. Optionally, the communication system may further include the Internet 300. The radio access network (radio access network, RAN) 100 may include at least one RAN node (for example, 110a and 110b in FIG. 1), and may further include at least one terminal (for example, 120a to 120j in FIG. 1). The terminal is connected to a radio access network device (or referred to as an access network device for short) in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. It may be understood that, in addition to the access network device, the communication system may further include another network device, for example, may further include a wireless relay device and a wireless backhaul device, which are not shown in FIG. 1.

In this application, the network device is a network side device having receiving and sending functions. For example, the network device may be an apparatus that provides a wired and/or wireless communication function for a terminal device in the RAN, and is referred to as a RAN device. The RAN may be an access network in the 3rd generation partnership project (3rd generation partnership project, 3GPP), for example, a 4G, 5G, or future-oriented 6th generation (6th generation, 6G) mobile communication network. The RAN may alternatively be an open access network (open RAN, O-RAN, or ORAN), a cloud radio access network (cloud radio access network, CRAN), or a communication network of two or more of the foregoing networks. The RAN device may be a base station (base station) in a long term evolution (long term evolution, LTE) or long term evolution advanced (LTE advanced, LTE-A) communication system, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, a wireless fidelity (wireless fidelity, Wi-Fi) system, a long range radio (long range radio, LoRa) system, or an access node in an internet of vehicles system. The RAN device may alternatively be a module or a unit that completes a part of functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the network device may be used as an abbreviation of the radio access network device, and the base station may be used as an example of the radio access network device.

It may be understood that the access network device may be a device including one or more of a CU, a DU, or an AAU. In addition, the CU may be classified into a network device in an access network, or the CU may be classified into a network device in a core network (core network, CN). This is not limited in this application.

The terminal is a device having a wireless transceiver function, and may send a signal to the base station, or receive a signal from the base station. The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, and smart home. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

It may be understood that the terminal in this application may be a device having a backscatter (backscatter) transmission function, for example, an AIOT terminal, or may be referred to as a tag, an AIOT tag, a terminal in an AIOT scenario, or a tag in the AIOT scenario. The AIOT terminal may be a terminal device that supports an RFID technology.

Types of AIOT terminals may be classified based on whether a backscatter (backscatter)-based communication manner is used. For example, the terminals may be classified into an active terminal, a passive terminal, and a semi-active terminal, and tags can be classified into an active tag (active tag), a passive tag (passive tag), and a semi-passive tag (semi-passive tag). A backscatter-based communication manner is used for the passive tag and the semi-passive tag, and a technology of actively generating a carrier, that is, non-backscatter-based communication, is used for the active tag. The AIOT terminal may also be referred to as an AIOT device, that is, may also be referred to as a device for ease of distinguishing from a 5G terminal.

In addition, the AIOT terminals may alternatively be classified based on whether the AIOT terminals possess or lack energy storage capability, or may be classified based on a combination of possessing and lacking energy storage capability. For example, the terminal in this application may alternatively be a device A, a device B, or a device C. The device A is a device that does not store energy and does not generate an independent signal, for example, may be a backscatter transmission device that specifically has this feature. The device B may be a device that stores energy but does not generate an independent signal, for example, may be a backscatter transmission device that specifically has this feature, where a manner of using the stored energy may include amplification of a backscatter signal. The device C may be a device that stores energy and generates an independent signal, for example, may be an active radio frequency (radio frequency, RF) component for transmission.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A function of the terminal may alternatively be performed by a module (for example, a chip or a modem) in the terminal, or may be performed by an apparatus including the function of the terminal.

In this application, the base station sends a downlink (downlink, DL) signal or downlink information to the terminal, where the downlink information is carried on a downlink channel; and the terminal sends an uplink (uplink, UL) signal or uplink information to the base station, where the uplink information is carried on an uplink channel.

It may be understood that, roles of the base station and the terminal in this application may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

In this application, an example in which a base station is used as an access network device is used for description subsequently. The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

In this application, the network device may further include a CN device. A core network element may include a mobility management network element, and is mainly configured for mobility management, access management, and the like. In the 5G communication system, the access management network element may be an access and mobility management function (access and mobility management function, AMF), and mainly implements functions such as mobility management and access authentication or authorization.

In a future communication system, for example, a 6G communication system, the mobility management network element may still use a name of the mobility management network element in the 5G communication system, or may have another name. This is not limited in embodiments of this application. Functions of the network elements or devices may be implemented by one independent network element, or may be jointly implemented by several network elements. During actual deployment, network elements in a core network may be deployed on a same physical device or different physical devices.

It may be understood that the mobility management network element may be a network element in a hardware device, or may be a software function running on dedicated hardware, or may be a virtualization function instantiated on a platform (for example, a cloud platform). Optionally, the network element or the function may be implemented by one device, may be jointly implemented by a plurality of devices, or may be a functional module in one device. This is not specifically limited in embodiments of this application.

In this application, an example in which the AMF is used as a mobility management network element or a core network element is used for description subsequently.

With increasingly wide application of 5G communication, NR communication, an MTC technology, and IoT communication, a quantity of IoT device connections increases day by day. Consequently, the industry has an increasingly strong demand for reducing costs and power consumption of the IoT device. In the 4G era, 3GPP introduces an NB-IoT system, to reduce costs and power consumption of the IoT device. However, an NB-IoT terminal further needs an overall external power supply, for example, a battery or an external power supply. In addition, the NB-IoT terminal has a capability of generating a local high-frequency local oscillation carrier. Therefore, a terminal of this type can achieve only milliwatt-level power consumption, and the power consumption needs to be further reduced. The RFID technology provides a good technical reference in terms of low power consumption, and can support microwatt-level power consumption. Therefore, the technology has a better application prospect. In this application, the terminal may use a low-precision low-power medium-to-low frequency ring oscillator or support a completely local-oscillator-free manner to receive a downlink signal. For example, when the terminal works, energy and carriers for communication are supplied by a reader/writer, and communication is performed based on a backscatter carrier. The reader/writer may be a handheld or fixed device for reading tag information. Optionally, the reader/writer may be further configured to write information into the terminal. A form of the reader/writer is not limited in this application, and the reader/writer may be a base station, a terminal, a relay node, or an integrated access and backhaul (integrated access and backhaul, IAB) node. For example, when the reader/writer is a terminal, communication between the reader/writer and the terminal may be considered as transmission between terminals. For another example, when the reader/writer is a base station, the reader/writer communicates with the terminal through a Uu interface, that is, performs air interface communication. The terminal may be located within a coverage area provided by the reader/writer.

As shown in FIG. 2, the reader/writer sends, through an antenna, a carrier shown by a solid line, and the terminal performs modulation based on the carrier sent by the reader/writer and backscatters a signal shown by a dashed line, to transmit information. A procedure in which the reader/writer triggers a plurality of terminals to complete reporting is referred to as an inventory procedure. The terminal may determine, based on an inventory flag bit, whether to access the reader/writer. The inventory flag bit may be implemented by software or a hardware capacitor. For example, the inventory flag bit may include two states: A and B or 0 and 1. This is not specifically limited. Any terminal may include at least one inventory flag bit, and the terminal may determine, based on the inventory flag bit, whether to respond to the reader/writer. For example, the reader/writer may select an inventory flag bit of A to access a network, or select an inventory flag bit of B to access the network. In addition, optionally, this application may also be applied to a communication scenario in which both the reader/writer and a helper (helper) exist. The terminal has only an uplink (or downlink) connection to the reader/writer (for example, a base station), and the terminal has only a downlink (or uplink) connection to the helper (for example, another terminal). In other words, the terminal transmits uplink and downlink data via the reader/writer and the helper respectively.

In addition, a 3GPP sidelink (sidelink, SL) is introduced to an LTE network as a direct communication manner between two terminals. In this communication manner, signal relay between the terminals does not need to be implemented via a base station. In 5G NR, leveraging successive support of new SL functions, the SL provides a low latency, high reliability, and a high throughput for communication between devices. Using the SL for wireless relay may provide a reliable and efficient manner for service forwarding. The SL relay evolves from proximity communication service (proximity service, ProSe) layer 3 (layer 3, L3) UE-to-network (UE-to-network) relay to layer 2 (layer 2, L2) UE-to-network relay, to expect forwarding of services between a remote UE and a base station at an adaptation layer (adaptation layer) between a radio link control (radio link control, RLC) layer and a PDCP layer.

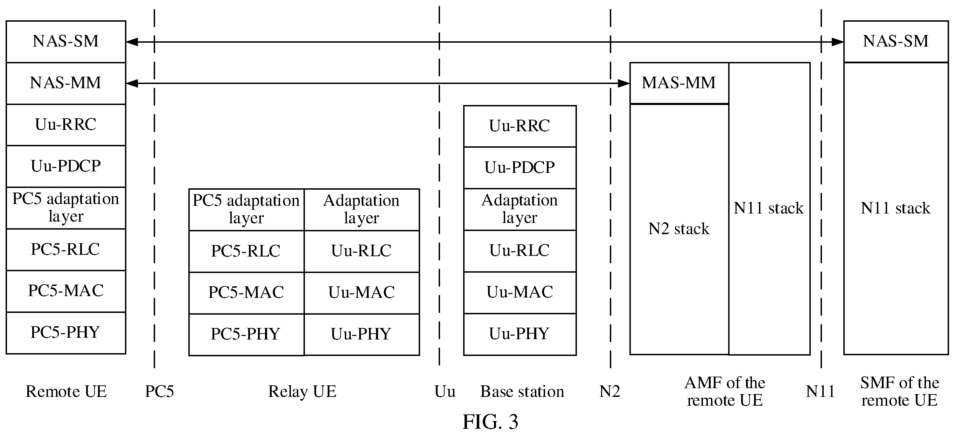

As shown in FIG. 3, a 5G SL relay architecture provides a protocol stack architecture for terminal-to-network relay communication. In uplink transmission, a data packet is sent by a remote UE, and is mapped to a bearer between the remote UE and a relay UE for transmission. The relay UE maps the data packet to a bearer between the relay UE and a base station for transmission, and finally data is transmitted to the base station and a core network. The bearer herein may be understood as a quality of service (quality of service, QoS) assurance of air interface transmission. A bearer corresponds to a QoS requirement, and the relay UE and the base station may perform transmission based on the QoS requirement corresponding to the bearer.

In downlink transmission, a data packet is received by a relay UE and sent to a remote UE. In a sending process, the data packet is first mapped to a bearer between a base station and the relay UE for transmission, and then the data packet is mapped to a bearer between the remote UE and the relay UE via the relay UE for transmission, and is sent to the remote UE. It can be learned from a protocol stack in FIG. 3 that, there is an adaptation (PC5 adaptation) layer between the remote UE and the relay UE. A main purpose of the adaptation layer is to map a data packet sent or received by the remote UE to the bearer between the remote UE and the relay and the bearer between the relay UE and the base station. However, when data transmission of the AIOT terminal is performed by using the relay, existence of the adaptation layer causes the protocol stack architecture to be unable to adapt to a capability of the AIOT terminal. For example, the AIOT terminal may not support a function of the adaptation layer. Therefore, the existing 5G SL protocol stack architecture cannot be completely used in the AIOT scenario. Therefore, how to implement a relay solution applicable to the AIOT terminal is an urgent technical problem to be resolved.

This application provides a communication method. The communication method may be implemented by a first communication apparatus, a second communication apparatus, and a third communication apparatus. In embodiments of this application, the first communication apparatus may be a communication apparatus, for example, a relay device, that provides a relay service for an AIOT terminal. In embodiments of this application, the second communication apparatus may be a communication apparatus, for example, a base station, configured to provide network access for the relay apparatus. In embodiments of this application, the third communication apparatus may be a communication apparatus, for example, an AMF, used by a core network to perform access and mobility management on the terminal and/or the relay apparatus.

According to the method, when the relay apparatus provides the relay service for the AIOT terminal, the relay apparatus requests, from the core network, to provide the relay service for the AIOT terminal, or indicates that the relay apparatus supports providing the relay service for the AIOT terminal, so that a core network apparatus indicates, to an access network, that the relay service provided by the relay apparatus is for the AIOT terminal, and the access network provides, for the relay apparatus, relay configuration information that can adapt to the AIOT apparatus. Because the relay service for the AIOT terminal cannot use a relay service configuration of a common terminal, the access network apparatus may provide the separate configuration information for the relay apparatus to adapt to the relay service for the AIOT terminal, so that the AIOT terminal can implement data transmission by using the relay service of the relay apparatus, to improve transmission performance of the AIOT terminal.

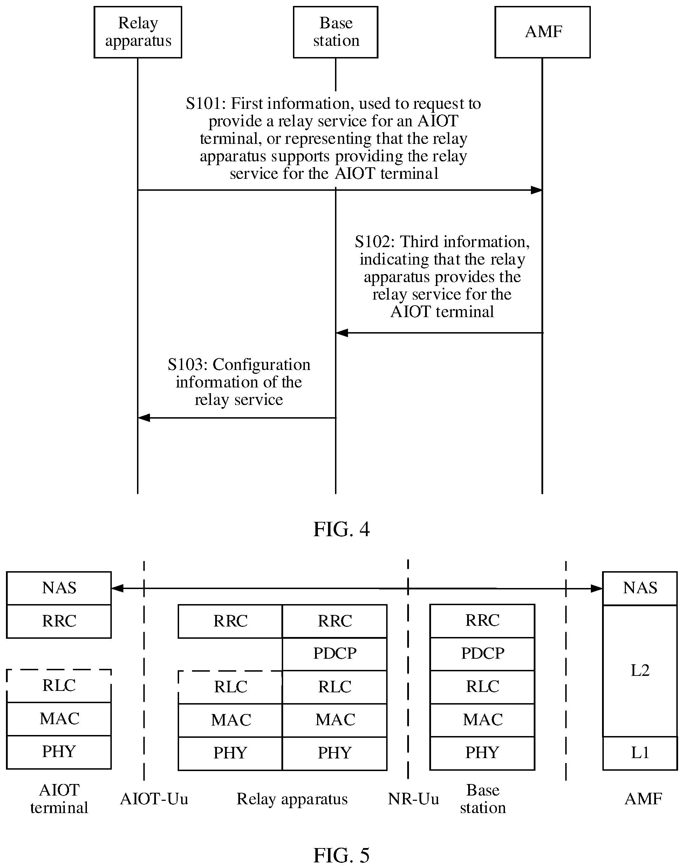

It may be understood that the relay apparatus may be a communication apparatus configured to provide the relay service for the AIOT, or may be a component like a chip, a processor, or a transceiver module in the communication apparatus. The relay apparatus may alternatively be replaced with a relay device, an intermediate node, an intermediate device, or the like. In an example, the relay apparatus may be in a form of a terminal, an IAB node, or the like. In other words, the relay service in this application includes a relay service provided for the AIOT terminal by the relay apparatus serving as the terminal, and also includes an IAB service provided for the AIOT terminal by a network device serving as an IAB node or a network device in another form. In addition, another form of the relay apparatus is not limited in this application. The AIOT terminal may be a terminal in an AIOT scenario, and may have another name in practice. This is not specifically limited in this application. The AIOT terminal may be replaced with an ultra-low power IoT terminal, or another device or apparatus that performs an AIOT service. The AIOT terminal may include the device A, the device B, or the device C described in this application. The following describes the method with reference to FIG. 4. In addition, in this application, the access network apparatus may be an access network device or a component like a chip, a processor, or a transceiver module of the access network device. For example, the access network device may be a base station, a CU, a DU, an RU, an AAU, an RRU, a BBU, or an RRH. The core network apparatus may be a core network element, or may be a component like a chip, a processor, or a transceiver module of the core network element. For example, the core network element may be an AMF.

In FIG. 4, an example in which a base station is used as an access network apparatus and an AMF is used as a core network apparatus is used for description. It may be understood that, in actual implementation, an action of the base station shown in FIG. 4 may alternatively be performed by another access network apparatus other than the base station.

As shown in FIG. 4, the communication method provided in this embodiment of this application may include the following steps.

S101: A relay apparatus sends first information to an AMF.

The first information may be used to request, indicate, or represent to provide a relay service for an AIOT terminal, and/or the first information represents or indicates that the relay apparatus supports providing the relay service for the AIOT terminal. Alternatively, the first information may be used to request, indicate, or represent to provide a relay service for a terminal, and/or the first information represents that the relay apparatus supports providing the relay service for the terminal. The terminal herein may include an AIOT terminal, an NR terminal, and another terminal.

It may be understood that one relay apparatus may be configured to provide a relay service for one or more AIOT terminals. This is not specifically limited in this application. Therefore, it may be understood that the first information indicates to provide the relay service for the AIOT terminal. The AIOT terminal herein is a general AIOT terminal, and may not be one or more specific AIOT terminals.

In an example of S101, the relay apparatus may send a registration request, where the registration request may be used to request to register the relay apparatus with the AMF. The registration request may include the first information. The registration request may be sent by the relay apparatus to the AMF via the base station.

Optionally, the first information may be used as a field in the registration request, or used as one or more bits in a field in the registration request. For example, a value of a specific field in the registration request may represent whether the relay apparatus requests, indicates, or represents to provide a relay service for an AIOT field. For example, when a value of the field is 0, it may represent that the relay apparatus provides a relay service for a common UE, and when a value of the field is 1, it may represent that the relay apparatus requests to provide a relay service for the AIOT field. In addition, the first information may alternatively be a field, an identity, or information in a specific format. The specific format may represent that the relay apparatus requests to provide the service for the AIOT field.

In a possible embodiment, the relay apparatus may serve as a terminal to initiate access to the base station, and after accessing the base station, the relay apparatus may send, to the AMF via the base station, the registration request including the first information.

In another example of S101, the first information may alternatively be carried in another message other than the registration request. For example, after registering with a network, the relay apparatus may send first signaling to the base station and/or the AMF, where the first signaling may include the first information. In this case, the first information may represent that the relay apparatus supports providing the relay service for the AIOT terminal.

Similar to that in the registration request, the first information may be used as a field in the first signaling, or used as one or more bits in a field in the first signaling.

Optionally, the first signaling may be an RRC message. For example, the first signaling may be a message 5 (message 5, MSG5). Specifically, the first signaling may be an RRC setup complete (RRC setup complete) message. Correspondingly, after receiving the RRC setup complete message including the first information, the base station may send the first information to the AMF. Optionally, the first information may be carried in an initial UE message sent by the base station to the AMF.

In addition, the first information may alternatively be information such as an identity that is of the relay apparatus and that is in the registration request, and may be used by the AMF to query whether the relay apparatus supports providing the relay service for the AIOT terminal. If a query result is that the relay apparatus supports providing the relay service for the AIOT terminal, S102 may be performed. In other words, when the information such as the identity of the relay apparatus is used as the first information, the information such as the identity of the relay apparatus may implicitly indicate whether the relay apparatus supports providing the relay service for the AIOT terminal.

In an alternative implementation, the first information may not explicitly represent to request to provide the relay service for the AIOT terminal or represent that providing the relay service for the AIOT terminal is supported. For example, the first information represents that providing the relay service is supported. In this case, a core network device may consider by default that the relay apparatus supports providing the relay service for the AIOT terminal, so that configuration information required for the relay service for the AIOT terminal is provided for the relay apparatus by using the method shown in this application.

S102: The AMF sends third information to the base station, where the third information indicates that the relay apparatus provides the relay service for the AIOT terminal.

In addition, a function of the third information may alternatively be described as follows: The third information indicates that authentication on the relay apparatus is confirmed or the relay apparatus passes authentication. For example, the third information may be an IAB authorized (IAB authorized) indication, or an AIOT relay authorized indication.

Optionally, S102 may be performed after the AMF determines that the relay apparatus passes the authentication.

Passing the authentication may mean that the AMF confirms that the relay apparatus is registered with the AMF as a terminal. Alternatively, passing the authentication may be understood as that the AMF confirms that the relay apparatus has a function of providing a relay service. In addition, passing the authentication may alternatively mean that the AMF allows the relay apparatus to provide the relay service for the AIOT terminal, or the AMF confirms that the relay apparatus has a capability of providing the relay service for the AIOT terminal.

In addition, optionally, after determining that the relay apparatus passes the authentication, the AMF may further send a registration response message or a registration accept message to the relay apparatus, to indicate or represent that the relay apparatus passes the authentication. The third information and the registration response message or the registration accept message may be carried in a same message sent by the AMF to the base station, to reduce signaling overheads. In addition, it is not excluded that the third information and the registration response message or the registration accept message may be carried in different messages sent by the AMF to the base station.

Optionally, in S102, the AMF may include the third information in an initial context setup request message sent to the base station.

S103: The base station sends the configuration information to the relay apparatus, where the configuration information is used by the relay apparatus to provide the relay service for the AIOT terminal.

Correspondingly, the relay apparatus may receive the configuration information from the base station, and provide the relay service for the AIOT terminal based on the configuration information. Because the relay service for the AIOT terminal is different from a relay service for a common terminal, for example, a capability of the AIOT terminal is different from a capability of a common terminal served by a relay service, in the procedure in FIG. 4, the relay apparatus supporting providing the relay service for the AIOT terminal is introduced, to provide the relay service for the AIOT terminal. In addition, based on S103, the base station may configure, for the relay apparatus, the configuration information applicable to the relay service for the AIOT terminal, so that the relay apparatus can provide the relay service for the AIOT terminal based on the configuration information. Therefore, a network coverage capability in an AIOT scenario can be improved by using the relay service provided by the relay apparatus, thereby improving relay communication performance of the AIOT terminal.

Optionally, the configuration information in S103 may include one or more of a relay identity of the relay service provided by the relay apparatus for the AIOT terminal, first area information, second area information, an identity set of the AIOT device, a system message provided for the AIOT terminal, or a transmission manner of the system message.

The following separately describes content that may be included in the configuration information.
(1) The relay identity may be an identity associated with the relay apparatus and/or the AIOT terminal, and represents the relay service provided by the relay apparatus for the AIOT apparatus. For example, the relay identity may be an identity of the relay apparatus, or may be identity information such as a cell identity provided by the relay apparatus for the AIOT terminal.
(2) The first area information may indicate an area to which a cell in which the relay apparatus is located belongs, or the first area information is area information of the relay apparatus, or the first area information is used by the relay apparatus to determine a current area to which the relay apparatus belongs. For example, the first area information may be area information of the cell in which the relay apparatus is located. The area information may be information such as an identity of the cell, an identity of a base station to which the cell belongs, an identity of a TRP, an identity of a CU, an identity of a DU, an identity of an RRU, an identity of an AAU, a tracking area identity (tracking area ID, TAI), or a tracking area code (tracking area code). The TAI or the tracking area code may indicate a tracking area code to which a cell indicated by a cell identity field belongs. For another example, the first area information may alternatively be geographical area information, for example, an area represented by using longitude and latitude information and/or distance information. The first area information may be sent via unicast signaling sent by the base station to the relay apparatus, or may be sent via a system message sent by the base station to the relay apparatus. For example, the first area information is carried in a system information block (system information block, SIB) 1 sent by the base station to the relay apparatus.

Optionally, each time the relay apparatus accesses the base station, the relay apparatus may report first area information of the relay apparatus, to align the area information with the base station. Alternatively, when discovering that the first area information included in the system message is different from the first area information stored by the relay apparatus, the relay apparatus may access the base station, to update the first area information. For example, the relay apparatus may initiate a tracking area update (tracking area update, TAU) procedure, to update a TA. Specifically, when determining that an area to which the relay belongs changes, the relay sends a registration request message to a core network, and indicates to perform TA update. The core network receives the message, determines a current first area of the relay with reference to the network device that receives the message, and stores information.

Optionally, after the AIOT terminal accesses the relay apparatus, the relay apparatus may provide the first area information for the AIOT terminal, so that the AIOT terminal learns of a service area of the relay to which the terminal belongs.

(3) The second area information may indicate an area to which a cell in which the AIOT terminal is located belongs. In other words, the second area information is area information of the AIOT apparatus, or the first area information is used by the AIOT terminal to determine the current area to which the AIOT terminal belongs. For example, the second area information may be area information of a cell in which the relay apparatus is located or area information of the relay apparatus, for example, an identity of the cell, an identity of a base station to which the cell belongs, an identity of a TRP, an identity of a CU, an identity of a DU, an identity of an RRU, an identity of an AAU, or a TAI. For another example, the second area information may be geographical area information. It may be understood that, in some scenarios, the first area information and the second area information may be same area information. For example, an area of the relay apparatus is the same as that of the AIOT terminal.

The AIOT terminal may initiate a TAU procedure to the base station or the AMF, to update area information of the AIOT terminal. For example, when the AIOT terminal performs an intra-base station area change, the AIOT terminal may send a TAU request only to the base station, and receive updated area information from the base station. For another example, when performing an inter-base station area change, the AIOT terminal may send a TAU request to the AMF, and receive updated area information from the AMF. For a manner in which the AIOT terminal sends the TAU request to the base station or the AMF, refer to the manner in which the AIOT terminal sends the data to the base station or the AMF in this application. In other words, the TAU request may be used as one type of uplink data of the AIOT terminal.

Optionally, if the configuration information does not include the second area information, the second area information may alternatively be configured for the relay device via a network management device.

(4) The identity set of the AIOT device includes an identity of one or more AIOT devices. The relay apparatus may allocate an identity from the set to the AIOT terminal, and subsequently the AIOT terminal may be identified based on the identity.

(5) The system message, or referred to as system information (system information), may include a cell-level configuration parameter. For example, the system message includes a master information block (master information block, MIB) and a SIB1.

(6) Transmission configuration information corresponding to the system message may indicate information such as a sending periodicity and a sending resource of the system message. The relay apparatus may send, to the AIOT device based on the transmission configuration information, the system message included in the configuration information. Therefore, the relay apparatus may be configured to send the system message, so that the AIOT terminal may perform data transmission with the relay apparatus based on the system message.

Optionally, the configuration information may further include an uplink/downlink transmission resource used by the relay apparatus to provide relay transmission for the AIOT terminal. Refer to a relay configuration of a common terminal. For example, the uplink/downlink transmission resource may include one or more of a transmission resource used by the AIOT terminal to send data and/or information to the relay apparatus, a transmission resource used by the relay apparatus to send data and/or information to the AIOT terminal, a transmission resource used by the relay apparatus to send data and/or information of the AIOT terminal to the base station, and a transmission resource used by the base station to send data and/or information of the AIOT terminal to the relay apparatus. It may be understood that the uplink/downlink transmission resource may be configured periodically or aperiodically.

In the periodic configuration, transmission resources between the relay apparatus and the base station may have a fixed periodicity interval. Therefore, the relay apparatus performs relay data transmission with the base station only based on a specific periodicity, that is, sends uplink data or information of the AIOT terminal to the base station only based on a specific periodicity, and/or receives downlink data or information of the AIOT terminal from the base station based on a specific periodicity. When the periodic configuration is used, or when the relay apparatus is configured to perform only a periodic relay service, the relay apparatus may stay in a Uu air interface idle state or inactive state in a non-sending periodicity of the relay service, to reduce power consumption, that is, enter a connected state from the idle state or the inactive state only when the periodicity of the relay service reaches, and perform transmission with the base station.

Optionally, the configuration information may alternatively include a configuration used by the relay apparatus to provide a continuous wave, a carrier, or a wireless charging carrier for the AIOT terminal. Correspondingly, the relay apparatus may send or provide the continuous wave, the carrier, or the wireless charging carrier for the AIOT terminal based on the configuration, to support the AIOT terminal in sending data based on backscatter of the continuous wave, the carrier, or the wireless charging carrier sent by the relay apparatus, or provide energy for a terminal without energy. Specifically, the configuration may include at least one piece of information of power, a frequency, a periodicity, a time length, start time, and end time that is used by the relay apparatus to send the continuous wave, the carrier, or the wireless charging carrier to the AIOT terminal.

In addition, the configuration information may further include a power configuration. The power configuration may be used to configure a power parameter used when the relay apparatus provides the relay service.

It may be understood that the configuration information includes configuration information applicable to the relay service for the AIOT terminal, to support the relay apparatus in providing the relay service for the AIOT terminal. For example, in the configuration information, one or more of the relay identity, the first area information, the second area information, the identity set of the AIOT device, the system message, the transmission configuration information corresponding to the system message, and the configuration used by the relay apparatus to provide the continuous wave, the carrier, or the wireless charging carrier for the AIOT terminal is configuration information that distinguishes the relay service for the AIOT terminal from the relay service for the common terminal.

Optionally, some or all content in the configuration information described above may be sent via an RRC reconfiguration message or a system message; or some content in the RRC reconfiguration message may be sent via a system message, and some content in the RRC reconfiguration message may be sent via dedicated signaling. For example, the configuration information is used as some or all fields of the RRC reconfiguration message. Correspondingly, after obtaining or using the configuration indicated by the configuration information, the relay apparatus may send an RRC reconfiguration complete indication to the base station, to indicate that the configuration information has been accepted or used.

When the access network device sends the configuration information via a broadcast message, for example, when the access network device sends the first area information and/or the second area information via the broadcast message, the broadcast message may further include third area information. The third area information may be used by the common terminal to determine information about an area to which a cell in which the common terminal is located belongs. The common terminal is, for example, a non-AIOT terminal, a non-relay device, or a terminal (for example, an eMBB terminal) that supports communication between people.

It may be understood that the configuration information may be obtained each time the relay apparatus accesses the base station. For example, the relay apparatus may obtain different configuration information when accessing the base station in different areas.

In addition, it may be further understood that the configuration information may be allocated by the base station, or may be allocated by the AMF and provided for the base station. If the configuration information is allocated by the base station or configured by the network management device, the base station may provide configuration information such as the relay identity, the first area information, or the second area information for the AMF. For example, in a process of establishing an interface between the base station and the AMF or in a process of establishing a connection between the AIOT terminal and the core network, the base station sends the configuration information of the relay service to the AMF. The configuration information may include at least one of the relay identity associated with the relay service between the relay apparatus and the AIOT terminal, the first area information, and the second area information, so that the base station and the AMF perform unified configuration, and the AMF subsequently pages the AIOT terminal by using the related configuration information. For another example, after the AIOT terminal accesses the base station, the base station may send the first area information of the relay apparatus connected to the AIOT terminal to the AMF. In this case, when sending a paging message, the AMF may send the first area information to the base station together, or may include the first area information in the paging message, so that the base station sends, based on the first area information, paging to the relay apparatus that belongs to the area represented by the first area information. After receiving the paging message, the relay apparatus may send the paging message to the corresponding AIOT terminal. Because the AMF may determine, based on signaling for receiving the first area information, that the cell and/or the base station that reports the first area information via the signaling is a cell and/or a base station that the relay apparatus accesses, the AMF may subsequently send a paging message to the corresponding cell and/or base station that reports the first area information, so that the relay apparatus may obtain the paging message.

Similarly, if the AMF allocates the configuration information such as the relay identity, the first area information, or the second area information, the AMF may store at least one of the relay identity associated with the relay service between the relay apparatus and the AIOT terminal, the first area information, and the second area information.

It may be understood that in embodiments of this application, an access technology used by the relay apparatus to access the base station is an access technology of a Uu air interface, for example, an access technology used by an NR terminal to access the base station. An access technology used by the AIOT terminal to access the relay apparatus is a relay access technology like an AIOT access technology or an SL access technology. In other words, the access technology used between the relay apparatus and the AIOT terminal is different from the access technology used between the relay apparatus and the base station. The AIOT access technology may be a type of NR. However, bottom-layer transmission manners of the AIOT access technology and the access technology of the NR terminal are different, and may be specifically reflected in at least one of aspects such as a coding scheme, a modulation scheme, a waveform design, and whether there is a preamble for data transmission.

It may be understood that, in the procedure in FIG. 4, the base station may send the configuration information in S103 in a unicast or broadcast manner. For example, when the configuration information is sent in a unicast manner, the configuration information may be carried in a unicast message sent by the base station to the relay apparatus. For another example, when the configuration information is sent in a broadcast manner, the configuration information may be carried in a broadcast message sent by the base station.

If the configuration information is sent in the unicast manner, it represents that the configuration information is configuration information of a relay service corresponding to one or more AIOT terminals of the relay apparatus, and does not include a configuration related to another relay apparatus or terminal. In an example, the configuration information obtained each time the relay apparatus accesses the base station may be sent in the unicast manner.

In addition, the configuration information may alternatively be sent in a manner of using a unicast message and a broadcast message. The broadcast message may further include a configuration of another relay apparatus and/or terminal, for example, include the third area information. For example, the broadcast message may be periodically sent, and may carry area information of the relay apparatus and/or area information of the AIOT terminal, used by the relay apparatus and/or the AIOT terminal to identify whether an area change occurs. Configuration information other than the area information of the relay apparatus and/or the area information of the AIOT terminal may be sent via a unicast message.

Considering that the relay apparatus is mobile, an area change may occur due to movement. Therefore, this application further provides an area update solution of the relay apparatus. For example, the relay apparatus obtains configuration information based on the broadcast message or the unicast message of the base station, and obtains area information included in the configuration information. If the relay apparatus determines that the area information is different from previously received area information, and newly received first area information is different from first area information stored by the relay apparatus, the relay apparatus may identify that an area change occurs.

For example, the first area information is TA information (for example, a TAI). If the relay apparatus determines that an area change occurs, the relay apparatus may initiate a TAU procedure, and cause the base station or the AMF to obtain updated area information based on the TAU procedure. For example, with reference to the descriptions in this application, the relay apparatus may initiate a TAU procedure to the AMF when the area information changes, and the AMF may determine a current TA area of the terminal based on a base station or a cell from which TA update signaling is received.

Similarly, the AIOT terminal may also identify, based on second area information (which may be from the relay apparatus or the base station) stored in the AIOT terminal and new second area information broadcast by the base station, whether an area change occurs. If an area change is sent, area update can be performed. With reference to the descriptions in this application, the AIOT terminal may initiate a TAU procedure to the base station or the AMF when the area information changes, to request to update the area information.

Optionally, in embodiments of this application, the base station and/or the AMF may allocate, to the AIOT terminal, identity information between the base station and the AMF, to identify the AIOT terminal on an NG-AP interface. For example, the identity information between the base station and the AMF is an NG interface application layer signaling protocol (NG application protocol, NGAP). For example, the base station may allocate a RAN UE NGAP ID to the AIOT terminal, and the AMF may allocate an AMF UE NGAP ID to the AIOT terminal. The NG interface is an interface between the base station and the AMF. The base station and the AMF determine the terminal or identify the terminal based on the identity. For example, the RAN UE NGAP ID and the AMF UE NGAP ID may be allocated to a same AIOT terminal, that is, the RAN UE NGAP ID and the AMF UE NGAP ID correspond to an AIOT identity of a same AIOT. Therefore, if downlink data of the AIOT terminal needs to be transmitted, the AMF may also send the downlink data to the base station, and then the base station sends the data to the AIOT terminal via the relay. That is, the base station needs to store an association relationship between the relay identity and the AIOT terminal. The AIOT terminal may be replaced with another terminal.

For example, the base station may store a correspondence between relay information and an AIOT identity, and the relay information may include the relay identity or an identity of an area covered by the relay apparatus, for example, the first area information. When receiving a message from the AMF, the base station may determine, based on a RAN UE NGAP ID carried in the message, an AIOT terminal associated with the message, find a corresponding relay apparatus based on an association relationship between relay information and an AIOT identity, and send the message sent by the AMF to the corresponding relay apparatus. For example, the message sent by the AMF may be a message sent to the AIOT terminal or a message used to page the AIOT terminal, for example, may be NGAP signaling associated with the AIOT terminal, that is, the signaling carries a RAN UE NGAP ID.

Similarly, when the base station sends a message to the AMF, the message may also carry an AMF UE NGAP ID allocated by the AMF to the AIOT terminal, which is used by the AMF to determine which AIOT terminal the message is from, or determine which AIOT terminal the message is related to.

In an example, if a paging message is used to page a group of terminals, when the relay terminal sends uplink data of a plurality of AIOT terminals to the base station, the relay apparatus may send the data of the plurality of AIOT terminals together to the base station, and the base station sends the data together to the core network device. Optionally, via a plurality of messages, the data of the plurality of AIOT terminals may alternatively be transmitted from the relay to the base station, and then transmitted from the base station to the core network device. When the data of the plurality of AIOT terminals is sent to the core network device together, the base station may transmit a list of the data to the core network device via a piece of NGAP signaling associated with a non-AIOT terminal, to represent that the message is associated with the plurality of AIOT terminals. In this case, there may be a new identity, identifying a service or transmission corresponding to the group of AIOT terminals, or representing that the NGAP signaling is not dedicated to one AIOT terminal, but corresponds to the plurality of AIOT terminals.

The following describes a transmission process of the AIOT terminal. In this application, the transmission process of the AIOT terminal includes uplink transmission and/or downlink transmission of information such as data, indication information, or configuration information of the AIOT terminal. The following uses a data transmission process of the AIOT terminal as an example for description, and an information transmission process may be implemented with reference to the data transmission process.

Based on the configuration information, the relay apparatus may obtain information about a transmission resource of the AIOT terminal, and indicate the transmission resource to the AIOT terminal, so that the AIOT terminal sends data to the relay apparatus by using the transmission resource. In addition, the relay apparatus may further send the data of the AIOT terminal to the base station based on a resource that is between the relay apparatus and the base station and that is indicated by the configuration information. The following mainly uses a transmission process of uplink data of the AIOT terminal as an example for description, and a transmission process of downlink data may be implemented with reference to the transmission process of the uplink data.

In this application, the data of the AIOT terminal may include an electronic product code (electronic product code, EPC) of the AIOT terminal.

Optionally, after receiving the data from the AIOT terminal, the relay apparatus may forward the data to the base station via a first message. The first message may be carried on a signaling radio bearer (signaling radio bearer, SRB). The data may be included in a container of the first message, and/or the data may be included in the first message as a NAS data packet. For example, the first message may be an RRC message. Therefore, when sending the uplink data to the base station via the relay apparatus, the AIOT terminal may send the uplink data to the relay apparatus via the RRC message, and then the relay apparatus sends the uplink data of the AIOT terminal to the base station via the RRC message.

The first message may include the NAS data packet and an AIOT identity. The AIOT identity may be a random number. For example, the AIOT identity is a relay identity that is sent by the base station to the relay apparatus via the configuration information in S 103 and that is provided by the relay apparatus for the AIOT apparatus. For another example, the AIOT identity is an identity allocated by the relay apparatus to the AIOT terminal. For another example, the AIOT identity may alternatively be an identity generated by the AIOT terminal.

In an example, the first message may carry the AIOT identity and the NAS data packet. Optionally, the first message may further include indication information, and the indication information may indicate that the NAS data needs to be forwarded to the AMF. The NAS data packet may include the uplink data of the AIOT terminal.

In another example, the first message may carry the AIOT identity and an RRC container, and the RRC container may include the NAS data packet. The NAS data packet may include the uplink data of the AIOT terminal.

In another example, the first message may carry the AIOT identity and an RRC field. The RRC field may be a field or an information element (information element, IE), and may include content such as data or uplink indication information.

Specifically, if the AIOT terminal supports an RRC connection-related procedure, in one manner, the AIOT sends an RRC connection request, and after receiving the RRC connection request, the relay apparatus sends a message to the base station based on the RRC connection request. The message sent by the relay apparatus may include temporary identity information of the AIOT and/or the RRC connection request. A manner of carrying the RRC connection request may be carrying a complete message of the RRC connection request received from the AIOT terminal or carrying content included in the RRC connection request. After receiving the message, a network device may return an RRC connection setup message to the AIOT terminal. Specifically, the network device may send the RRC connection setup message to the AIOT terminal via the relay apparatus. For example, the network device sends, to the relay apparatus, a message including the AIOT identity and an RRC setup request, where the message may carry a complete message of the RRC setup request or content including the RRC setup request. Correspondingly, after the relay apparatus receives the message, if the message includes the complete message of the RRC setup request, the AIOT terminal may directly send the RRC setup message to the AIOT terminal; or if the message includes content such as a field of the RRC setup request, the relay apparatus may construct a new RRC connection setup message based on the content of the RRC setup request, and send the new RRC connection setup message to the AIOT terminal. In addition, for a manner of sending uplink and downlink messages in this application, refer to the manner herein.

In another example, the first message may be a message 5. For example, after the AIOT terminal and the relay apparatus complete an RRC connection setup process, when the AIOT terminal sends, to the relay apparatus, a message 5 that includes content such as data or uplink indication information, the relay apparatus sends the message 5 or a field included in the message 5 to the base station via a message, where the message may include an AIOT identity and information about the message 5. After receiving the message, the base station sends an initial UE message to the AMF. The initial UE message may include some or all information obtained from the message 5, for example, the data. In addition, for a manner of sending an uplink message in this application, refer to the manner herein.

In another example, if the AIOT terminal does not support an RRC connection, after the AIOT terminal accesses a network side, the AIOT terminal may send uplink data or signaling to the relay apparatus by using an RLC layer, a PDCP layer, a MAC layer, or a PHY layer. Correspondingly, the relay apparatus may send the data or the signaling to the base station via an RRC message. Specifically, the RRC message may also include an identity or address information of the AIOT terminal. Alternatively, the base station may establish, for the AIOT terminal, a connection between the base station and the AMF. For example, when a message of the AIOT terminal is transmitted, the base station allocates interface identity information, for example, a RAN UE NGAP ID, between the base station and the AMF to the AIOT terminal.

In a possible embodiment, FIG. 5 shows an AIOT relay protocol stack architecture according to an embodiment of this application. A peer protocol stack between a relay node and the AIOT terminal may include a PHY layer, a MAC layer, and an RRC layer, and optionally, may further include an RLC layer and/or a PDCP layer. Optionally, the protocol stack architecture between the AIOT terminal and the relay apparatus may not include an RRC layer. For example, the MAC layer in FIG. 5 is replaced with an RLC layer and/or a PDCP layer. That is, the peer protocol stack between the relay node and the AIOT terminal may not include an adaptation layer. In conclusion, an existing 5G SL protocol stack architecture is complex, and if the AIOT terminal in the current AIOT scenario directly uses the existing 5G SL protocol stack architecture, costs are high. However, using the simplified protocol stack structure shown in FIG. 5 helps adapt to a capability of the AIOT terminal. It may be understood that the relay apparatus in this application supports the protocol stack architecture shown in FIG. 5, and therefore supports providing the relay service for the AIOT terminal.

Based on the protocol stack shown in FIG. 5, data of the AIOT terminal may be encapsulated in any one of the following manners:
Manner 1: When the AIOT terminal supports a NAS layer and an RRC layer, if data of the AIOT terminal is transmitted based on the NAS, the data may be included in an RRC message, and the AIOT terminal may complete data transmission with the base station and the core network by using an RRC layer forwarding function of the relay apparatus.
Manner 2: When the AIOT terminal does not support an RRC layer but supports a NAS layer, data of the AIOT terminal may be encapsulated in a NAS data packet, and the NAS data packet is carried by using a MAC layer or another layer, to implement transmission between the AIOT terminal and the relay apparatus.
Manner 3: When the AIOT terminal supports neither an RRC layer nor a NAS layer, data of the AIOT terminal may be carried in another protocol layer similar to the NAS layer, and transmitted by using a MAC layer or another layer protocol layer; or the data may be directly carried by using the MAC layer.

Optionally, the data of the AIOT terminal may include an identity of the AIOT terminal, for example, an AIOT identity, identifying the AIOT terminal to which the data belongs.

In an example of downlink transmission, a downlink message sent by the base station to the relay apparatus may carry at least one of an AIOT identity, a NAS data packet, an RRC field, and the like. After the message is sent by the base station to the relay apparatus, the relay apparatus may identify, based on the AIOT identity, the AIOT terminal to which the message belongs, and forward the message to the AIOT terminal, or forward some or all content included in the message, where the message may include the NAS data packet.

As shown in FIG. 5, a relay layer or a routing layer between the AIOT terminal and the relay apparatus may be at the RRC layer, and there is no need to introduce a new layer as a route.

Optionally, the relay apparatus may map content in a message to a separate bearer based on an AIOT identity carried in the message (for example, an RRC message) received from the AIOT terminal or the base station, and send the message to the AIOT terminal or the base station, to meet a QoS requirement. For example, the relay apparatus sends the RRC message via a separate bearer, where the RRC message includes some or all content of the RRC message received from the AIOT terminal or the base station.

The RRC of the relay apparatus may be carried by a new SRB, that is, carried by an SRB different from an existing SRB 0 to SRB 3. In this way, the base station and the relay perform corresponding scheduling, to meet specific QoS, for example, the new SRB may have a higher priority.

It may be understood that uplink transmission of the AIOT terminal may include the AIOT identity. For a transmission manner, refer to that of downlink transmission. Details are not described again.

In embodiments of this application, after the AIOT terminal completes transmission, the relay apparatus may send, to the base station, a transmission complete indication or an indication message used to release the AIOT terminal. Correspondingly, the base station may send, to the AMF, the transmission complete indication or the indication message used to release the AIOT terminal. Optionally, the transmission complete indication or the indication message used to release the AIOT terminal may include first area information of the relay node, a relay identity, or an identity of the relay apparatus, to represent that the relay apparatus has completed relay transmission. In addition, the first area information of the relay node, the relay identity, or the identity of the relay apparatus that represents that the relay transmission is completed may alternatively be carried in a message or information other than the transmission complete indication or the indication message used to release the AIOT terminal sent to the AMF. This is not specifically limited in this application. Optionally, when sending, to the core network device, the transmission complete indication or the indication message used to release the AIOT terminal or before sending the indication, the base station may send, to the AMF, information about a second area to which the AIOT terminal belongs, so that the AMF can store the second area information. The AIOT terminal may enter an idle state or an inactive state after completing the transmission. Therefore, when subsequent downlink data arrives, the AMF may page the AIOT terminal via the stored first area information and/or second area information, so that the AIOT terminal accesses the network. The following provides descriptions with reference to a downlink data transmission process.

In addition, after configuring or determining the configuration information in S103, the base station may send relay service information of the relay apparatus to the AMF, so that the AMF can store relay range information of the relay apparatus, to perform an operation like paging the AIOT terminal based on the relay range information. For example, the relay range information sent by the base station to the AMF includes one or more pieces of information of the relay identity, the first area information, the second area information, the identity of the relay apparatus, and the identity of the AIOT terminal in the configuration information, and indicates that the relay apparatus provides the relay service for the AIOT terminal, so that the base station and the AMF can unify related configurations. Alternatively, the AMF may send a configuration of the relay apparatus to the base station before S103, and the configuration information in S103 may be determined based on the configuration. For example, the configuration of the relay apparatus may include one or more of the relay identity, the first area information, and the second area information. That is, some content in the configuration information sent by the base station to the relay apparatus may be configured by the AMF, so that the base station and the AMF can unify related configurations.

Optionally, when AIOT data transmission is completed, the base station may trigger the relay apparatus to release the terminal, or the base station may request the core network to release the terminal, or the core network indicates the base station to release the terminal. The base station sends a release indication to the relay apparatus. After the relay apparatus receives an indication indicating that the AIOT terminal is released, the relay apparatus may send a release complete indication to the base station or the core network; or after the base station receives an indication indicating that the AIOT terminal is released, the base station may send a release complete indication to the core network. After receiving the release indication, the relay apparatus may release the AIOT terminal. The release indication may also have another name, for example, a transmission end indication. Optionally, when AIOT data transmission is completed, the relay device may request the base station or the core network to release the terminal.

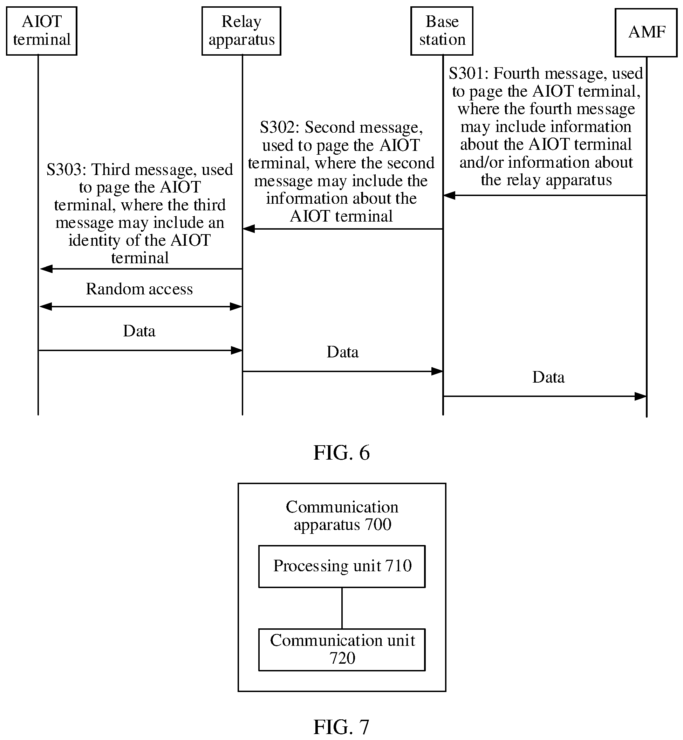

Optionally, when the AIOT terminal is in a state of having no transmission connection to the network side, or when the AIOT terminal is in an idle or inactive state, and downlink data arrives, the AMF may send a paging message to the base station, to page the AIOT terminal to access the network. As shown in FIG. 6, in S301, when there is downlink data of the AIOT terminal, the AMF may initiate to page the AIOT terminal. Optionally, in S301, the AMF may determine, based on the stored second area information of the AIOT terminal, the base station associated with the AIOT terminal, and send, to the base station, a paging message (which may be referred to as a fourth message) used to page the AIOT terminal, where the paging message may include the identity of the AIOT terminal and/or the second area information of the AIOT terminal. Optionally, the paging message may further include information about the relay apparatus, for example, include one or more of the relay identity, the identity of the relay apparatus, or the first area information. Optionally, when determining a location of the AIOT terminal, the AMF may determine, based on the first area information and/or the second area information, a cell in which the AIOT terminal is located or a coverage area of the relay apparatus in which the AIOT terminal is located. Optionally, the AMF may further determine a location of the AIOT terminal based on information about a cell to which the relay apparatus belongs.

The relay identity, the first area information, and/or the second area information stored by the AMF may be stored in the AMF when the AIOT terminal is connected last time or in a data transmission process last time, for example, are/is obtained by the AMF from a message from the relay apparatus or the base station. In addition, at least one of the relay identity, the first area information, and the second area information stored by the AMF may be content in the configuration information provided by the base station for the AMF after the configuration information of the relay service is configured, or may be stored after the AMF configures the configuration information.

As shown in FIG. 6, the base station may receive the fourth message, and determine, based on the information (for example, the relay identity) about the relay apparatus, the relay apparatus serving the AIOT terminal. In addition, the base station may alternatively determine, based on the second area information in the paging message, the relay apparatus that provides the relay service for the AIOT terminal in the area. In addition, the base station may alternatively query, based on the identity that is of the AIOT terminal and that is included in the paging message, the relay apparatus that provides the relay service for the AIOT terminal.

In S302, the base station may send a second message to the relay apparatus, to page the AIOT terminal. The unicast message may include information about the AIOT terminal, for example, include the identity of the AIOT terminal and/or the second area information of the AIOT terminal. Optionally, the second message may be a unicast message, or may be a paging message for the AIOT terminal. After receiving the second message, the relay apparatus may send another paging message to the AIOT terminal, and include, in the paging message sent by the relay apparatus to the AIOT terminal, paging content for the AIOT terminal or the identity of the AIOT terminal in the paging message sent by the base station, to page the AIOT terminal.

In S303, after receiving the second message, the relay node may select appropriate time based on a paging occasion of the AIOT terminal or according to a predefined rule, to send a paging message (which may be referred to as a third message) to the AIOT terminal. Correspondingly, the paged AIOT terminal may initiate random access, and may perform data transmission after completing the random access. For example, the AIOT terminal may send uplink data after accessing the network. The paging occasion of the AIOT terminal may be obtained through calculation based on a paging cycle of the AIOT terminal, and a manner of obtaining the paging occasion is not limited in this application.

Optionally, the third message is a unicast message sent by the relay apparatus to the AIOT terminal.

In addition, the third message may further include a first indication, indicating that the relay apparatus provides the relay service for the AIOT terminal. In this case, the AIOT terminal may subsequently obtain the relay service via the relay apparatus, that is, perform transmission with the base station via the relay apparatus. The first indication may indicate that the relay apparatus is a relay device rather than a base station. For example, a first apparatus includes information such as the relay identity. For example, an existing field or existing information in the paging message may be reused in the first indication.

Based on a same concept, an embodiment of this application further provides a communication apparatus. The communication apparatus may include corresponding hardware structures and/or software modules for performing the functions shown in the foregoing method. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 7 to FIG. 9 are diagrams of structures of possible communication apparatuses according to embodiments of this application. The communication apparatus may be configured to implement functions of the relay apparatus, the access network apparatus, or the core network apparatus in the method embodiments, and therefore can also implement beneficial effects of the method embodiments. For related details and technical effects of the relay apparatus, the access network apparatus, or the core network apparatus, refer to the descriptions in the foregoing embodiments.

As shown in FIG. 7, a communication apparatus 700 includes a processing unit 710 and a communication unit 720. The communication unit 720 may implement a corresponding communication function, and the processing unit 710 is configured to process data. The communication unit 720 may alternatively be a transceiver unit, an input/output interface, or the like. The communication apparatus 700 may be configured to implement functions implemented by the relay apparatus, the access network apparatus, or the core network apparatus in the method embodiment shown in FIG. 4 or FIG. 6.

For example, when implementing a function of the relay apparatus in the embodiment shown in FIG. 4, the communication unit 720 may be configured to send first information. In addition, the communication unit 720 may be further configured to receive configuration information of a relay service. The communication unit 720 may be further configured to perform relay transmission of an AIOT terminal according to the protocol stack shown in FIG. 5.

When implementing a function of the base station in the embodiment shown in FIG. 4, the communication unit 720 may be configured to: receive third information, and send configuration information of a relay service to a relay apparatus. The communication unit 720 may be further configured to perform relay transmission of an AIOT terminal according to the protocol stack shown in FIG. 5.

When implementing a function of the AMF in the embodiment shown in FIG. 4, the communication unit 720 may be configured to: receive first information, and send third information to a base station.

For meanings of the foregoing technologies, refer to the descriptions in the method embodiments. Details are not described again.

It may be understood that in embodiments of this application, division into modules is an example, and is merely logical function division. In practical implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software functional module.

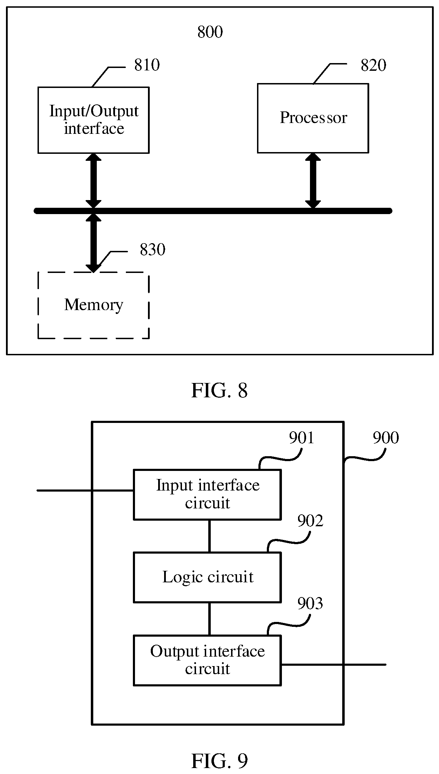

FIG. 8 shows a communication apparatus 800 according to an embodiment of this application. The communication apparatus 800 is configured to implement the communication method provided in this application. The communication apparatus 800 may be a communication apparatus to which the communication method is applied, may be a component in the communication apparatus, or may be an apparatus that can be used in combination with the communication apparatus. The communication apparatus 800 may be a relay apparatus, an access network apparatus, or a core network apparatus. The communication apparatus 800 may be a chip system or a chip. In this embodiment of this application, the chip system may include a chip, or may include a chip and another discrete component. The communication apparatus 800 includes at least one processor 820, configured to implement the communication method provided in embodiments of this application. The communication apparatus 800 may further include an input/output interface 810, and the input/output interface may include an input interface and/or an output interface. In this embodiment of this application, the input/output interface 810 may be configured to communicate with another apparatus via a transmission medium, and a function of the input/output interface 810 may include sending and/or receiving. For example, when the communication apparatus 800 is the chip, the communication apparatus 800 performs transmission with another chip or device through the input/output interface 810. The processor 820 may be configured to implement the method shown in the method embodiments.

For example, the processor 820 may be configured to perform an action performed by the processing unit 710, and the input/output interface 810 may be configured to perform an action performed by the communication unit 720. Details are not described again.

Optionally, the communication apparatus 800 may further include at least one memory 830, configured to store program instructions and/or data. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. At least one of the at least one memory may be integrated with the processor.

In this embodiment of this application, the memory 830 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 820 may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

FIG. 9 shows a communication apparatus 900 according to an embodiment of this application. The communication apparatus 900 is configured to implement the communication method provided in this application. The communication apparatus 900 may be a communication apparatus to which the communication method shown in embodiments of this application is applied, or may be a component in the communication apparatus, or may be an apparatus that can be used in combination with the communication apparatus. The communication apparatus 900 may be a relay apparatus, an access network apparatus, or a core network apparatus. The communication apparatus 900 may be a chip system or a chip. In this embodiment of this application, the chip system may include a chip, or may include a chip and another discrete component. A part or all of the communication method provided in the foregoing embodiments may be implemented by hardware or software. When the method is implemented by hardware, the communication apparatus 900 may include an input interface circuit 901, a logic circuit 902, and an output interface circuit 903.

Optionally, an example in which the apparatus is configured to implement a function of a receive end is used. The input interface circuit 901 may be configured to perform a receiving action performed by the communication unit 720, the output interface circuit 903 may be configured to perform a sending action performed by the communication unit 720, and the logic circuit 902 may be configured to perform an action performed by the processing unit 710. Details are not described again.

Optionally, during specific implementation, the communication apparatus 900 may be a chip or an integrated circuit.

Some or all of operations and functions performed by the communication apparatus described in the method embodiments of this application may be implemented by using the chip or the integrated circuit.

An embodiment of this application provides a computer-readable storage medium storing a computer program. The computer program includes instructions for performing the method embodiments.

An embodiment of this application provides a computer program product including instructions. When the computer program product runs on a computer, the computer is caused to perform the method embodiments.

An embodiment of this application provides a communication system, which may include a relay apparatus, an access network apparatus, and a core network apparatus, configured to implement the method shown in FIG. 4 or FIG. 6.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

It should be noted that a part of this patent application document includes copyright-protected content. Except for making copies of patent documents of the Patent Office or recorded content of patent documents, the copyright owner reserves the copyright.

An access network device, a first core network element, or a second core network element in the foregoing apparatus embodiments is corresponded, and a corresponding module or unit performs a corresponding step. For example, the communication unit (a transceiver) performs a receiving or sending step in the method embodiments, and the processing unit (the processor) may perform another step other than sending and receiving. For a function of a specific unit, refer to a corresponding method embodiment. There may be one or more processors.

The terms such as "component", "module", and "system" used in this specification represent computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) and steps (step) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first communication apparatus, first information to a core network apparatus, wherein the first information is used to request to provide a relay service for an ambient internet of things AIOT terminal, and/or the first information indicates that the first communication apparatus supports providing the relay service for the AIOT terminal; and
receiving, by the first communication apparatus, configuration information of the relay service from an access network apparatus.

2. The method according to claim 1, wherein the configuration information comprises one or more of the following:
a relay identity of the relay service;
the first area information, indicating an area to which a cell in which the first communication apparatus is located belongs;
the second area information, indicating an area to which a cell in which the AIOT terminal is located belongs; and
an identity set of the AIOT device.

3. The method according to claim 2, wherein the method further comprises:
sending, by the first communication apparatus, an identity of the AIOT terminal to the AIOT terminal, wherein the identity of the AIOT terminal is comprised in the identity set.

4. The method according to claim 2 or 3, wherein the method further comprises:
sending, by the first communication apparatus, the second area information to the AIOT terminal.

5. The method according to any one of claims 1 to 4, wherein the configuration information comprises a system message and transmission configuration information of the system message; and
the method further comprises:
sending, by the first communication apparatus, the system message to the AIOT terminal based on the transmission configuration information of the system message.

6. The method according to any one of claims 1 to 5, wherein the method further comprises:
receiving, by the first communication apparatus, data from the AIOT terminal; and
sending, by the first communication apparatus, a first message to the access network apparatus, wherein the first message is carried on a signaling radio bearer, and the first message comprises the data.

7. The method according to claim 6, wherein the first message further comprises the identity of the AIOT terminal.

8. The method according to claim 7, wherein the data is comprised in a container of the first message.

9. The method according to any one of claims 1 to 8, wherein
the configuration information is carried in a broadcast message or a unicast message; and
if the configuration information is carried in the broadcast message, the broadcast message further comprises third area information, indicating information about an area to which a cell in which a first terminal is located belongs.

10. The method according to claim 9, wherein the method further comprises:
if it is determined that the area in which the first communication apparatus is located changes, sending, by the first communication apparatus, second information to the access network apparatus and/or the core network apparatus, wherein the second information indicates that an area change occurs.

11. The method according to any one of claims 1 to 10, wherein the method further comprises:
receiving, by the first communication apparatus, a second message from the access network apparatus, wherein the second message is used to page the second terminal; and
sending, by the first communication apparatus, a third message to the AIOT terminal, wherein the third message is used to page the AIOT terminal.

12. The method according to claim 11, wherein the third message comprises a first indication, and the first indication indicates that the first communication apparatus provides the relay service for the AIOT terminal.

13. The method according to claim 12, wherein the second message is a unicast message, and/or the third message is a unicast message.

14. A communication method, comprising:
receiving, by a second communication apparatus, third information from a core network apparatus, wherein the third information indicates that a relay apparatus provides a relay service for an ambient internet of things AIOT terminal; and
sending, by the second communication apparatus, configuration information of the relay service to the relay apparatus.

15. The method according to claim 14, wherein the method further comprises:
receiving, by the second communication apparatus, a first message from the relay apparatus, wherein the first message is carried on a signaling radio bearer, and the first message comprises the data; and
sending, by the second communication apparatus, the data of the AIOT terminal to the core network apparatus.

16. The method according to claim 15, wherein the first message comprises an identity of the AIOT terminal.

17. The method according to claim 16, wherein the data is comprised in a container of the first message.

18. The method according to any one of claims 14 to 17, wherein the configuration information comprises one or more of the following:
a relay identity of the relay service;
the first area information, indicating an area to which a cell in which the relay apparatus is located belongs;
the second area information, indicating an area to which a cell in which the AIOT terminal is located belongs; and
an identity set of the AIOT device, wherein the identity set comprises the identity of the AIOT terminal.

19. The method according to any one of claims 14 to 18, wherein
the configuration information is carried in a broadcast message or a unicast message; and
if the configuration information is carried in the broadcast message, the broadcast message further comprises third area information, indicating information about an area to which a cell in which a third terminal is located belongs.

20. The method according to claim 19, wherein the method further comprises:
receiving, by the second communication apparatus, second information from the relay apparatus, wherein the second information indicates that an area change occurs.

21. The method according to any one of claims 14 to 20, wherein the method further comprises:
receiving, by the second communication apparatus, a fourth message from the core network apparatus, wherein the fourth message is used to page the AIOT terminal; and
sending, by the second communication apparatus, a second message to the relay apparatus, wherein the second message is used to page the AIOT terminal.

22. The method according to claim 21, wherein the second message is a unicast message.

23. The method according to claim 21 or 22, wherein the fourth message comprises at least one of the following information:
the relay identity of the relay service;
the first area information, indicating the area to which the cell in which the relay apparatus is located belongs; and
the second area information, indicating the area to which the cell in which the AIOT terminal is located belongs.

24. The method according to claim 23, wherein the method further comprises:
sending, by the second communication apparatus, the configuration information of the relay service to the core network apparatus; or
receiving, by the second communication apparatus, the configuration information of the relay service from the core network apparatus, wherein
the configuration information of the relay service comprises at least one of the relay identity, the first area information, and the second area information.

25. A communication method, comprising:
receiving, by a third communication apparatus, first information from a relay apparatus, wherein the first information indicates that the relay apparatus provides a relay service for an ambient internet of things AIOT terminal, and/or the first information indicates that the relay apparatus supports providing the relay service for the AIOT terminal; and
sending, by the third communication apparatus, third information to an access network apparatus, wherein the third information indicates that the relay apparatus provides the relay service for the AIOT terminal.

26. The method according to claim 25, wherein the method further comprises:
sending, by the third communication apparatus, a fourth message to the access network apparatus, wherein the fourth message is used to page the AIOT terminal; and
the fourth message comprises at least one of the following information:
a relay identity of the relay service;
first area information, indicating an area to which a cell in which the relay apparatus is located belongs; and
second area information, indicating an area to which a cell in which the AIOT terminal is located belongs.

27. The method according to claim 26, wherein the method further comprises:
receiving, by the third communication apparatus, configuration information of the relay service from the access network apparatus; or
sending, by the third communication apparatus, configuration information of the relay service to the access network apparatus, wherein
the configuration information of the relay service comprises at least one of the relay identity, the first area information, and the second area information.

28. A communication apparatus, comprising a unit or a module configured to perform the method according to any one of claims 1 to 13, or comprising a unit or a module configured to perform the method according to any one of claims 14 to 24, or comprising a unit or a module configured to perform the method according to any one of claims 25 to 27.

29. A communication apparatus, comprising a processor, wherein the processor is configured to execute a computer program or instructions, to implement the method according to any one of claims 1 to 27.

30. The apparatus according to claim 29, further comprising a memory and/or a transceiver, wherein the memory is configured to store the computer program or the instructions, and the transceiver is used by the apparatus for communication.

31. A computer-readable storage medium, wherein the storage medium stores a computer program or instructions, and when the computer program or the instructions are executed by a communication apparatus, the method according to any one of claims 1 to 27 is implemented.

32. A computer program product, comprising a computer program or instructions, wherein when the computer program or the instructions are executed by a computer, the computer is caused to implement the method according to any one of claims 1 to 27.

33. A chip, wherein the chip is coupled to a memory, and the chip reads a computer program stored in the memory, to perform the method according to any one of claims 1 to 27.

34. A communication system, comprising a communication apparatus configured to perform the method according to any one of claims 1 to 13 and a communication apparatus configured to perform the method according to any one of claims 14 to 24.

35. The communication system according to claim 34, further comprising a communication apparatus configured to perform the method according to any one of claims 25 to 27.
